# EUROPEAN PATENT APPLICATION

(11) **EP 3 649 903 A1**
(43) Date of publication of application: **13.05.2020**
(21) Application number: 17916724.2
(22) Date of filing: 30.10.2017
(51) Int. Cl.: A47J 31/40, A47J 31/44

(54) **COFFEE-SPECIFIC ELECTRONIC SCALE**

(30) Priority: 03.07.2017 CN 201720795248 U
(71) Applicant: Zhan, Huachun, Shanghai 201204 (CN)
(72) Inventor: ZHAN, Huachun, Shanghai 201204 (CN); YU, Yue, Shanghai (CN)
(74) Representative: Longoni, Alessandra
(86) International application number: PCT/CN2017/108269
(87) International publication number: WO 2019/006926

(57) **Abstract**

A coffee-specific electronic scale, comprising an electronic scale (1). The electronic scale (1) comprises a base (2); a main control chip (3) is provided on the base (2); wires are provided on the main control chip (3); No.1 scale device (4) and No.2 scale device (5) are provided in the base (2); a pour-over coffee stand (6) is provided on the No.2 scale device (5); and a filter device (7) is provided on the pour-over coffee stand (6); the No.1 scale device (4) and the No.2 scale device (5) are separately connected to the main control chip (3) by means of wires; an operating panel (8), which is connected with the main control chip (3) by conducting wires, is set on the external wall of the base (2) .The coffee-specific electronic scale can accurately weigh real-time total water pouring amount in the process of making drip coffee, thus helping to more accurately regulate the water pouring rate, reducing errors in calculating the concentration of coffee, and ensuring the taste of the coffee.

## Description

### Technological Field

This utility model mainly concerns the coffee utensil. Specially, it is an electronic scale specially designed for coffee use.

### Background Techniques

Coffee, one of the three major drinks in the world, has efficacy of fatigue eliminating, skin beauty, diuresis and body dampness removing, and weight losing. Coffee is now attracting more and more fans around the world. However, the ratio of coffee powder to water and the extraction rate of coffee could affect its taste. The extraction rate of coffee could be affected by the brewing time. Therefore, the operator needs to weigh the total amount of pour-over water all the time during the process of making pour-over coffee, and takes it as the basis for adjusting the water pouring speed. Nowadays, people usually place an ordinary electronic scale at the bottom of the sharing pot to weigh the weight of the filtered coffee liquid which is taken as the total weight of the poured water. But the method of weighing the poured water weight by such ordinary electronic scale has problems as follows:
When making pour-over coffee, there exist time and flow differences between water pouring-in and dripping-out, so that the real-time weight of the filtered coffee liquid weighed is actually smaller than the total pouring-in water weight in real-time. As a matter of fact, this is a large error. Meanwhile, both the coffee powder and coffee filter paper can also absorb water, so the weights of total poured-in water and the filtered-out coffee liquid are not the same. Therefore, it causes great error when calculating coffee concentration and adjusting the water pouring speed according to the filtered-out coffee liquid weight weighed by currently existing electronic scale, which is taken as the total poured-in water weight. If so, the taste of coffee can be greatly affected.

### Contents of Utility Model

In order to solve the deficiencies of the current techniques, this utility model provides a coffee-specific electronic scale. It can accurately weigh the total weight of real-time water pouring, reduce errors in the calculation of coffee concentration and adjustment of water pouring speed, thereby guaranteeing the taste of coffee.

In order to fulfill the above purposes, the utility model is achieved by the following technical solutions:
A coffee-specific electronic scale composes of electronic scale. The scale contains a base, on which, a main control chip with conducting wires is well set, and No.1 scale device and No.2 scale device are set on the base as well. As for No.2 scale device, a pour-over coffee stand is set, on which, a filter device is set as well. The No.1 scale device and No.2 scale device are respectively connected to the main control chip by conducting wires. The operating panel, which is connected with the main control chip by conducting wires, is set on the external wall of the base.

The No.1 scale device is composed of No.1 pressure sensor, on the No.1 pressure sensor, a scale tray is set on the top. And the No.2 scale device includes No.2 pressure sensor, on the No.2 pressure sensor, a support plate is provided on the top. Both the support plate and the pour-over coffee stand are connected.

A boss is set at the bottom center of the base. The No.1 pressure sensor is fixed on the top of this boss, and the No.2 pressure sensor is fixed at the bottom of the base. The No.1 pressure sensor is fixed on the top of the support plate, and the No.2 pressure sensor is fixed to the central part at the bottom of base.

An insertion end is provided at the bottom of the pour-over coffee stand, and a jack is provided at the side of the support plate, the No.1 opening is set on the side of the base, the No.2 opening is set on the side of the scale tray, and the insertion end passes through the No.1 opening and the No.2 opening to adapt to the jack.

The No.1 display and the No.2 display are set on the operating panel.

A micro switch is set in the jack, and the micro switch and the No.2 scale device are connected to the main control chip by conducting wires.

Steps to make αml coffee liquid:
S1: Fill the filter device with coffee powder, and place the container on the electronic scale, then clear the No.1 display and No.2 display;
S2: Pour 80 ~ 100 °C water into the filter device, and obtain the filtered liquid coffee volume in real-time through the No.1 display, and obtain the total water pouring volume in real-time through the No.2 display;
S3: When the value of the No.2 display screen reaches αml∼(α+5)ml, slow down the speed of pouring water or make it stay still for 10-30S and then continue to pour water. When the value on No.1 display reaches αml, the coffee liquid can be obtained.

Compared with the prior art, this utility model has beneficial effects as follows:
1. This utility model is provided with two sets of scale devices. The pour-over coffee stand is set on No.2 scale device, so that the coffee liquid remained in the filtering device can be weighed as well. The accurate total weight of the poured water can be obtained in real time by adding the weight of the coffee liquid remained in the filter device and the filtered coffee liquid weight obtained by No.1 scale device, thus to reduce errors in the coffee concentration calculation and the water pouring speed adjustment.
2. The No.1 scale device of this utility model includes a No.1 pressure sensor, on the No.1 pressure sensor, the scale tray is set on the top. The sharing pot is placed on the scale tray to weigh the filtered coffee liquid weight in real time. The No.2 scale device includes a No.2 pressure sensor, on the No.2 pressure sensor, a support plate is provided on the top. The support plate is connected with the pour-over coffee stand as a connecting and supporting mechanism, thus to make No.2 scale device able to calculate the weight of the coffee liquid remained in the filter device. In this way, accurate data of the total weight of the poured water and the weight of the filtered coffee liquid can both be obtained in real time, which could be used as a reference for calculating the coffee concentration and adjusting the water pouring speed, thereby reducing the calculation error and ensuring the taste of the coffee.
3. A boss is provided at the central part of the base of the utility model. The No.1 pressure sensor is fixed on the top of the boss to measure the weight of the filtered coffee liquid in the sharing pot. The No.2 pressure sensor is fixed at the bottom of the base to measure the water remained in the filter device. The two items of data can be processed by the main control chip to obtain the accurate total water pouring weight by adding the two weights. In this way, the filtered coffee liquid weight can be also obtained, which can be taken as the reference for calculating the coffee concentration and adjusting the water pouring speed, thereby reducing the calculation error and ensuring the taste of the coffee.
4. The No.2 pressure sensor of this utility model is fixed at the central part of the bottom of the base. The support plate is set above the No.2 pressure sensor. And the No.1 pressure sensor is fixed at the top of the support plate, and is connected with the No.2 pressure sensor in serial connection structure. The No.1 pressure sensor measures the weight of the filtered coffee liquid in the sharing pot while the No.2 pressure sensor measuring the weight of the filtered coffee liquid in the sharing pot and the weight of the water remained in the filter device, that is, the total weight of the poured water, thus to obtain accurate total weight of poured water and the weight of the filtered coffee liquid at the same time. These data can be taken as references to calculate the coffee concentration and adjust the water pouring speed, thereby reducing the calculation error and guaranteeing the coffee taste.
5. An insertion end is set at the bottom of the pour-over coffee stand of this utility model, and a jack is set at the side of the support plate to match with the insertion end, through which, the pour-over coffee stand is fixed on the support plate. The No.1 opening is provided on the side of the base while the No.2 opening is set on the side of the scale tray. Both the two openings serve as the channel for the matching between the insertion end and the jack. The pour-over coffee stand can be connected to the support plate more firmly by plug-in method to prevent shaking of the pour-over coffee stand due to non-firm fixing, which can affect the weighing results. In this way, accurate total weight of poured water can be obtained while guaranteeing easy operation feature, so as to minimize the calculation error of coffee concentration, and accurately adjust the water pouring speed.
6. The No.1 display and the No.2 display are set on the operating panel of the utility model, which respectively display the total weight of the poured water and the weight of the filtered coffee liquid clearly and concisely.
7. A micro switch is set inside the jack of the utility model. The micro switch and the No.2 scale device are connected with the main control chip by conducting wires. When the insertion end of the pour-over coffee stand is firmly fitted with the jack, the micro switch will be triggered to connect the No.2 scale device to the main control chip wires, so to measure the weight of water remained in the filter device. If the insertion end of the pour-over coffee stand is not totally inserted into the jack, namely, the insertion end is not well matched with the jack, this micro switch would not be triggered.

### DESCRIPTION OF THE DRAWINGS

Figure 1 is a reference drawing for the using state of the utility model;
Figure 2 is a schematic diagram of the base structure of Embodiment 1 of this utility model;
Figure 3 is a schematic diagram of the base structure of Embodiment 2 of this utility model;
Figure 4 is a schematic diagram of the insertion end and jack structure of this utility model.

Legend in the drawings: 1. Electronic scale; 2. Base; 3. Main control chip; 4. No.1 scale device; 5. No.2 scale device; 6. Pour-over coffee stand; 7. Filter device; 8 Operating panel; 9. No.1 pressure sensor; 10. Scale tray; 11. No.2 pressure sensor; 12. Support plate; 13. Boss; 14. Insertion end; 15. Jack; 16. No.1 opening; 17. No.2 opening; 18. No.1 display; 19. No.2 display; 20. Sharing pot; 21. Water pot.

### Specific Way of Implementation

This utility model will be further described combining with drawings and specific embodiment. It should be understood that these embodiments are only to describe this utility model, not constraining the scope of this utility model. Moreover, it should be understood that after reading the explaining contents of this utility model, personnel skillful in this field can make various changes or modifications to this utility model. And these equivalent forms are also within the scope defined by this utility model.

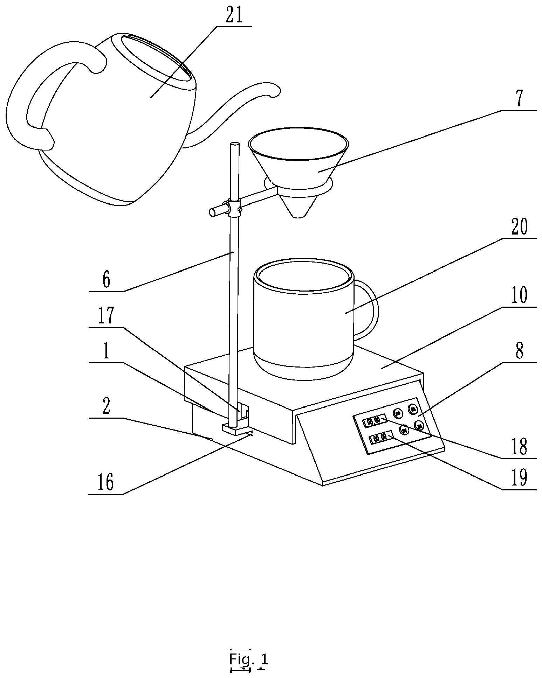

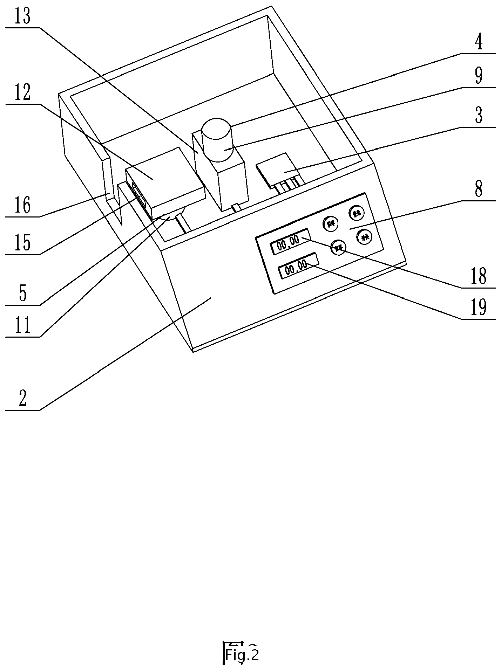

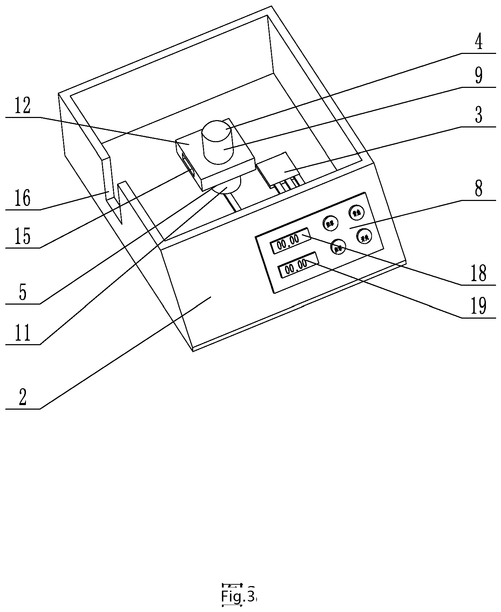

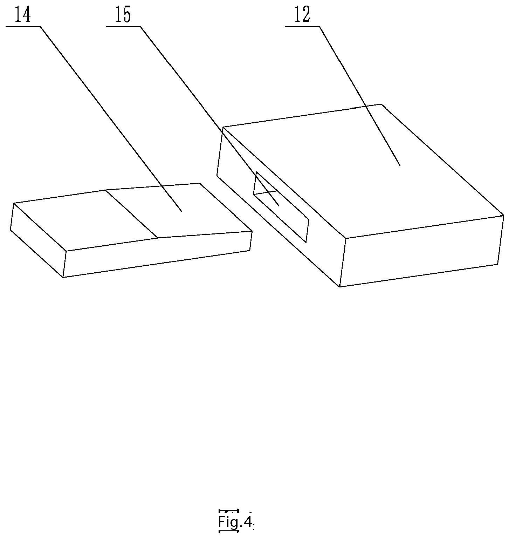

As shown in Figure 1-4, this utility model is an electronic scale specially designed for coffee, composes of electronic scale 1, which contains a base 2, serving as the carrier of all components of the electronic scale. The base is set with a main control chip 3 with conducting wires, and No.1 scale device and No.2 scale device. The main control chip 3, as the processing unit, converts electric signals of No.1 scale device 4 and No.2 scale device 5 into digital signals, and process the digital signals, which is the same as the currently existing electronic scale. The No.2 scale device 5 is set with the pour-over coffee stand 6, on which, the filter device 7 which is the same as the filter device used on currently existing pour-over coffee maker is provided. And the No.2 scale device 5 also weighs and includes the coffee liquid remained in the filter device 7. Both the No.1 scale device 4 and the No.2 filter device 5 are connected to the main control chip 3 by conducting wire. The operating panel 8 is set at the exterior wall of the base 2. Besides, the operating panel 8 is also connected with the main control chip 3 by conducting wires. As a matter of fact, the operating panel 8, as the instruction input end, controls a series of functions of this electronic scale. In this way, the total weight of poured water and the water pouring speed can be obtained and adjusted accurately in real time, so as to minimize the calculation error of coffee concentration

In order to reduce the calculation error of coffee concentration and adjust the water pouring speed more accurately, the No.1 scale device 4 includes a No.1 pressure sensor 9, on which a scale tray 10 is set on the top, thus to obtain the filtered coffee liquid weight in real time. The No.2 scale device 5 includes a No.2 pressure sensor 11. And the support plate 12 is provided on the top of the No.2 pressure sensor 11. As a matter of fact, the support plate12 is used as a connection and support mechanism to be inserted into the pour-over coffee stand 6 so that the No.2 scale device 5 can measure the weight of the coffee liquid remained in the filter device 7. The space of the scale tray 10 is away from the bottom surface of the base 2 is greater than that between the support plate 12 and the bottom surface of the base 2, thus to ensure that the No.1 scale device 5 could measure the weight of the filtered coffee liquid accurately. Through this structure, an accurate total weight of poured water can be obtained in real time. By taking the two weights as the reference for calculating the coffee concentration and adjusting the water pouring speed more accurately, thereby reducing errors and ensuring the taste of the coffee.

Furthermore, a boss 13 is provided at the central part of the bottom of the base 2. The No.1 pressure sensor 9 is fixed on the top of the boss 13 to measure the weight of the filtered coffee liquid. The No.2 pressure sensor 11 is fixed at the bottom of the base 2 to measure the weight of the water remained in the filter device 7. The two items of data are processed by the main control chip by adding operation to obtain the total weight of poured water, so as to obtain the accurate total weight of poured water in real time. Meanwhile, the weight of the filtered coffee liquid can be obtained as well. Both the two weights can be taken as the reference for calculating the coffee concentration and adjusting the water pouring speed accurately, thereby reducing errors and guaranteeing the taste of the coffee.

Furthermore, the No.2 pressure sensor 11 is fixed at the central part of the base 2 bottom, the No.1 pressure sensor 9 is fixed on the top of the support plate 12. Both the No.1 pressure sensor 9 and the No.2 pressure sensor 11 are connected in serial structure. Actually, the No.1 pressure sensor 9 is to measure the filtered coffee liquid weight, and the No.2 pressure sensor 11 is to measure the total value of the filtered coffee liquid weight and the coffee liquid weight remained in the filter device, that is, the total weight of the poured water, thus to acquire accurate total weight of poured water, and the filtered coffee liquid weight. These two weights can help to calculate the coffee concentration and adjust the water pouring speed, thus to minimize error and guarantee coffee taste.

In order to minimize the calculation error of coffee concentration and adjust the water injection rate more accurately, an insertion end 14 is provided at the bottom of the pour-over coffee stand 6, and a jack 15 is provided on the side of the support plate 12 to matched with the insertion end 14. The pour-over coffee stand 6 is fixed onto the support plate 12 by the matching between the insertion end 14 and the jack 15. Besides, a No.1 opening 16 is set on the side of the base 2, and a No.2 opening 17 is set on the side of the scale tray 10, serving as the channel for the matching between the insertion end 14 and the jack 15. The plug-in method is used to make the pour-over coffee stand 6 be firmly connected to the support plate 12, thus to prevent the pour-over coffee stand 6 from shaking which may affect the weighing results. In this way, it acquires accurate total weight of the poured water while guaranteeing easy operating feature, minimizes the calculation error of coffee concentration, and make adjustment of water pouring speed more accurate.

In order to show the two items of data of the total poured water weight and the filtered coffee liquid weight concisely, a No.1 display 18 and a No.2 display 19 are provided on the operation panel 8. The No.1 display 18 shows the weight of the filtered coffee liquid, and the No.2 display 19 shows the total weight of the poured water, so that the display of the two items of data could be simple and concise.

Furthermore, a micro switch is set inside the jack 15. The micro switch and the No.2 scale device 5 are connected with the main control chip 3 by conducting wires. When the insertion end 14 of the pour-over coffee stand is inserted into the jack 15, the micro motion will be touched and triggered to connect No.2 scale device 5 and the main control chip 3 by wires to measure the weight of the water remained in the filter device. This means that the pour-over coffee stand 6 is firmly fixed on the support plate 12. When the insertion end 14 is removed from the jack 15, the micro switch will be automatically disconnected by the spring, the No.2 scale device 5 and the main control chip 3 will be disconnected accordingly, and No.2 scale device will stop measuring weight. The setting of the micro switch is to detect whether the pour-over coffee stand 6 is firmly connected with the support plate 12 or not, thus to guarantee the safety during the coffee brewing process and make the data acquired during the weighing process more representative.

### Instructions:

When using this utility model, it should well place and assemble the electric scale 1, adjust the position of the pour-over coffee stand 6 to make it firmly connected with No.2 scale device 5. Then, prepare the filter device 7, and put the well ground coffee powder into the filter device 7, and put the sharing pot that is about to contain the filtered coffee liquid onto the No.1 scale device 4, and make it right under the filter device 7, and finally adjust the state of electronic scale 1 by operating panel 8. After all the preparation work is done, start to pour boiled water into the filter device. Then the No.1 scale device 4 and No.2 scale device 5 convey their respective electric signals to the main control chip 3, the main control chip 3 will convert the electric signals into digital signals and process and feedback the digital signals to the operating panel by conducting wires. During the water pouring process, it should observe the two values of total poured water weight and filtered coffee liquid weight showed on the operating panel 8, thus to adjust the water pouring speed timely, and stop pouring water when the total weight of the poured water reaches the theoretical value.

### Embodiment 1:

This utility model is a coffee-specific electronic scale. It contains the electronic scale 1, which composes of a base 2, serving as the carrier of all components of electronic scale 1. The base could be made of either metal material or plastic material. In this embodiment, it is made by metal stamping. The base is set with a main control chip 3 with conducting wires, serving as the control unit to convert electric signals into digital signals, and process the digital signals. A No.1 scale device 4 and a No.2 scale device 5 are set on the base. And the No.2 scale device 5 is set with a pour-over coffee stand 6, on which, the filter device 7 is set with. The filter device in this embodiment refers to funnel and filter paper. The funnel is put on the pour-over coffee stand while the filter paper contacting the inner wall of the funnel. The No.1 scale device 4 and the No.2 scale device 5 are connected to the main control chip 3 by conducting wires respectively. A boss 13 is provided at the center of the bottom of the base 2, and the No.1 scale device 4 includes a No.1 pressure sensor 9 which is fixed to the top of the boss 13 by bolts. The scale tray support rack is set on the top of No.1 pressure sensor 9. The support rack and the No.1 pressure sensor 9 are connected by bolts. A scale tray 10 is set on the top of the support rack and connected by pins. The No.2 scale device 5 includes a No.2 pressure sensor 11, which is fixed to the bottom of the base 2 by bolts. A support plate 12 is provided and fixed on the top of the No.2 pressure sensor 11 by bolts. The space between scale tray 10 and the bottom surface of the base 2 is greater than that between the support plate 12 and the bottom surface of the base 2, so to guarantee that the support plate 12 won't touch the sharing pot, which may affect the weighing result of No.1 scale device 4. A jack 15 is provided on the side of the support plate 12. And a micro switch is set inside the jack 15 to connect with the No.2 scale device 5 and the main control chip 3 by conducting wires. The insertion end 14 is set at the bottom of the pour-over coffee stand 6. The insertion end is wedge-shaped, which is made of metal materials the same as the pour-over coffee stand. Both the insertion end 14 and the pour-over coffee stand are welded together. A No.1 opening 16 is set on the side of base 2 and a No.2 opening is set p-n the side of the scale tray. The insertion end 14 passes the No.1 opening 16 and the No.2 opening 17 to connect to the jack 15. An operating panel 8 is provided on the exterior wall of the base 2. The operating panel 8 is connected to the main control chip 3 by conducting wires. And the operating panel 8 is provided with an on / off key, a backlight key and a clear key, as well as a No.1 display 18 and a No.2 display 19. In this embodiment, the main control chip 3 converts the electric signals of No.1 scale device 4 and No.2 scale device 5 into digital signals, and perform add operation for the digital signals to obtain the total weight of the poured water. The No.1 display 18 shows the weight of the filtered coffee liquid while the No.2 display 19 showing the total weight of the poured water. The beneficial effects of this embodiment is that: two sets of scale devices are set in this embodiment to measure the weight of the filtered coffee liquid and the weight of the coffee liquid remained in the filter device 7 in real time, and obtain the accurate total weight of poured water injection by adding operation, so as to adjust the water pouring speed more accurately and reduce the error in the calculation of coffee concentration.

### Embodiment 2: A method for brewing pour-over coffee.

Specific steps to brew 500ml coffee by using the coffee-specific electronic scale as mentioned in Embodiment 1:
Put the filter paper in the filter device, and put the coffee cup on the electronic scale, and clear the No.1 display and the No.2 display.

Fill the ground coffee in the filter paper, and then No.2 display shows the weight of the coffee powder. Weigh 50g coffee powder.

Clear No.2 display again, and pour 90 ° C water in the filter device in even speed to obtain the coffee liquid weight from No.1 display, and obtain the total weight of poured water in real time through No.2 display.

When the value on the No.2 display reaches 500g, make it stay still for 10 seconds, then slowly add hot water to make the value of the No.1 display reach 490g. Then stop pouring water and wait for the coffee drip. The coffee liquid can be obtained when the No.1 display shows value of 500g.

Specific steps to brew 200ml coffee by using the coffee-specific electronic scale as mentioned in Embodiment 1:
Put the filter paper in the filter device, and put the coffee cup on the electronic scale, and clear the No.1 display and the No.2 display.

Fill the ground coffee in the filter paper, and then No.2 display shows the weight of the coffee powder. Weigh 18g coffee powder.

Clear No.2 display again, and pour 85 °C water in the filter device in even speed. No.1 display shows the coffee liquid weight while No.2 display showing the total weight of poured water.

When the value on the No.2 display reaches 205g, slow down the speed of water pouring till the value on No.1 display reaches 100ml, then stop pouring water to obtain the coffee liquid.

The tools and materials involved in the above-mentioned pour-over coffee brewing method embodiment, unless otherwise specified, are all ordinary tools and materials existing in current techniques that can be obtained by conventional commercial channels. And the volumes and proportions of the concerned coffee powder and water, unless otherwise specified, shall be the conventional volume and methods in the prior art.

### Embodiment 3:

A coffee-specific electronic scale of this utility model includes an electronic scale 1, which includes a base 2, serving as a carrier of all component of the electronic scale 1. The metal or plastic material can be used. And for this embodiment, it is integrally formed by hard plastic. A main control chip 3 with conducting wires is provided on the base, which serves as a control unit to convert electrical signals into digital signals, and processes the digital signals. The base is provided with a No.1 scale device 4 and a No.2 scale device 5. The No.2 scale device 5 is provided with a pour-over coffee stand 6, on the pour-over coffee stand 6, a filter device 7 is set as well. In this embodiment, the filter device refers to a funnel and filter paper. The funnel is placed on the pour-over coffee stand, and the filter paper touches the inner wall of the funnel.The No.1 scale device 4 and the No.2 scale device 5 are connected to the main control chip 3 by conducting wires respectively. The No.2 scale device 5 includes a No.2 pressure sensor 11 which is fixed on the central part of the bottom of base 2 by bolts. A support plate 12 is set and fixed on the top of the No.2 pressure sensor 11 by bolts. The No.1 scale device 4 includes a No.1 pressure sensor 9, the No.1 pressure sensor 9 is fixed on the top of the support plate 12 by bolts. Meanwhile, the No.1 pressure sensor 9 has a scale tray 10 set on its top by bolts. A jack 15 is set on the side of the support plate 12, and an insertion end 14 is set at the bottom of the pour-over coffee stand 6. The insertion end 14 is wedge-shaped. And both the insertion end 14 and the pour-over coffee stand 6 are made of plastic integrally. A No.1 opening 16 is set on the side of the base 2, and a No.2 opening 17 is set on the side of the scale tray. The insertion end 14 passes through the No.1 opening 16 and the No.2 opening 17 to match with the jack 15. An operating panel 8 is provided on the exterior wall of the base 2 and connected to the main control chip 3 by conducting wires. The operation panel 8 is set with an on / off key, a backlight key and a clear key. Besides, the operation panel 8 is set a No.1 display 18 and a No.2 display 19. In this embodiment, the main control chip 3 converts electrical signals transmitted by the No.1 scale device 4 and the No.1 scale device 5 into digital signals, and the No.1 display 18 shows the weight of filtered coffee, and the No.2 display 19 shows the total weight of the poured water. The beneficial effects of this embodiment is that: two sets of scale devices are provided in this embodiment. The No.1 scale device 4 measures the weight of the filtered coffee liquid in real time, and the No.2 scale device 5 measures the total weight of the poured water in real time, so as to adjust the water pouring speed more accurately and reduce the error in the calculation of coffee concentration.

## Claims

1. A coffee-specific electronic scale, composes of electronic scale (1), with features as followings: the electronic scale (1) is composed of a base (2), on the base (2), a main control chip (3) with conducting wires is well set. Inside the base (2), No.1 scale device (4) and No.2 scale device (5) are set. As for No.2 scale device (5), a pour-over coffee stand (6) is set, on the pour-over coffee stand (6), a filter device (7) is set as well. The No.1 scale device (4) and No.2 scale device (5) are respectively connected to the main control chip (3) by conducting wires. The operating panel (8), which is connected with the main control chip (3) by conducting wires, is set on the external wall of the base (2).

2. A coffee-specific electronic scale as mentioned in Claim 1 is **characterized in that**: No.1 scale device (4) is composed of No.1 pressure sensor (9), on the No.1 pressure sensor (9), a scale tray (10) is set on the top. And the No.2 scale device (5) includes No.2 pressure sensor (11), on the No.2 pressure sensor (11), a support plate (12) is provided on the top. Both the support plate (12) and the pour-over coffee stand (6) are connected.

3. A coffee-specific electronic scale as mentioned in Claim 2 is **characterized in that**: a boss (13) is set at the bottom center of the base (2). The No.1 pressure sensor (9) is fixed on the top of this boss (13), and the No.2 pressure sensor (11) is fixed at the bottom of the base (2).

4. A coffee-specific electronic scale as mentioned in Claim 2 is **characterized in that**: the No.1 pressure sensor (9) is fixed on the top of the support plate (12), and the No.2 pressure sensor (11) is fixed to the central part at the bottom of base (2).

5. A coffee-specific electronic scale as mentioned in Claim 2 is **characterized in that**: an insertion end (14) is provided at the bottom of the pour-over coffee stand (6), and a jack (15) is provided at the side of the support plate (12), the No.1 opening (16) is set on the side of the base (2), the No.2 opening (17) is set on the side of the scale tray, and the insertion end (14) passes through the No.1 opening (16) and the No.2 opening (17) to adapt to the jack (15).

6. A coffee-specific electronic scale as mentioned in Claim 1 is **characterized in that**: the No.1 display (18) and the No.2 display (19) are set on the operating panel (8).

7. A coffee-specific electronic scale as mentioned in Claim 5 is **characterized in that**: a micro switch is set in the jack (15), and the micro switch and the No.2 scale device (5) are connected to the main control chip (3) by conducting wires.

8. A method for making pour-over coffee by using the coffee-specific electronic scale as mentioned in Claim 1-7 is **characterized in that**: the steps to make αml coffee liquid include:
S1: Fill the filter device (7) with coffee powder, and place the container on the electronic scale, then clear the No.1 display (18) and No.2 display (19);
S2: Pour 80 ~ 100 °C water into the filter device (7), and obtain the filtered liquid coffee volume in real-time through the No.1 display (18), and obtain the total water pouring volume in real-time through the No.2 display (19)
S3: When the value of the No.2 display screen (19) reaches αml-(α+5)ml, slow down speed of pouring water or make it stay still for 10-30S and then continue to pour water. When the value on No.1 display (18) reaches αml, the coffee liquid can be obtained.
